# EUROPEAN PATENT APPLICATION

(11) **EP 4 582 169 A1**
(43) Date of publication of application: **09.07.2025**
(21) Application number: 23860341.9
(22) Date of filing: 29.08.2023
(51) Int. Cl.: B01D 53/04

(54) **ACIDIC GAS ADSORPTION DEVICE**

(30) Priority: 01.09.2022 JP 2022139536
(71) Applicant: NGK Insulators, Ltd., Nagoya-shi, Aichi 467-8530 (JP)
(72) Inventor: ANDO Junichi, Nagoya-shi, Aichi 467-8530 (JP); TAKAHASHI Michio, Nagoya-shi, Aichi 467-8530 (JP); OKUMA Yusuke, Nagoya-shi, Aichi 467-8530 (JP); IIDA Kazuki, Nagoya-shi, Aichi 467-8530 (JP); KAN Hirofumi, Nagoya-shi, Aichi 467-8530 (JP); SHIBAGAKI Yukinari, Nagoya-shi, Aichi 467-8530 (JP); MAEHARA Sota, Nagoya-shi, Aichi 467-8530 (JP)
(74) Representative: MERH-IP Matias Erny Reichl Hoffmann Patentanwälte PartG mbB
(86) International application number: PCT/JP2023/031209
(87) International publication number: WO 2024/048579

(57) **Abstract**

Provided is an acid gas adsorption device capable of stably desorbing an acid gas from an acid gas adsorption material. An acid gas adsorption device according to an embodiment of the present invention includes a first adsorption portion and a second adsorption portion. The second adsorption portion is arranged on a downstream side of the first adsorption portion in a direction of passage of a target gas to be treated so as to be spaced apart from the first adsorption portion. The first adsorption portion includes first flow passages, and the second adsorption portion includes second flow passages. A first desorption gas flow passage communicating with the first flow passages and the second flow passages is defined between the first adsorption portion and the second adsorption portion in the direction of passage of the target gas to be treated.

## Description

### Technical Field

The present invention relates to an acid gas adsorption device.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed a gas separation unit including a carbon dioxide adsorption part having a pellet structure (see, for example, Patent Literature 1). In such a gas separation unit, after a carbon dioxide adsorption material adsorbs CO₂ at a predetermined adsorption temperature, and is then heated to a desorption temperature exceeding the adsorption temperature, CO₂ that has been adsorbed by the carbon dioxide adsorption material is desorbed. When a desorption gas is supplied to the carbon dioxide adsorption part so as to pass therethrough, the desorbed CO₂ is captured together with the desorption gas. In the gas separation unit described in Patent Literature 1, however, the carbon dioxide adsorption part has a pellet structure. Thus, it is difficult to cause the desorption gas to flow uniformly through the entirety of the carbon dioxide adsorption part. In addition, because of a long distance of flow of the desorption gas, a temperature of the desorption gas decreases as the desorption gas flows downstream. Thus, a temperature distribution may occur in the carbon dioxide adsorption part due to non-uniformity in flow rate of the desorption gas in the carbon dioxide adsorption part and a decrease in temperature of the desorption gas. As a result, the temperature of the carbon dioxide adsorption part locally becomes less than the desorption temperature, and thus there arises a problem in that CO₂ cannot be sufficiently desorbed from the carbon dioxide adsorption material.

### Citation List

### Patent Literature

[PTL 1] WO 2014/170184 A1

### Summary of Invention

### Technical Problem

A primary object of the present invention is to provide an acid gas adsorption device capable of stably desorbing an acid gas from an acid gas adsorption material.

### Solution to Problem

[1] According to an embodiment of the present invention, there is provided an acid gas adsorption device including an acid gas adsorption part that allows passage of a target gas to be treated in a predetermined direction. The acid gas adsorption part includes a first adsorption portion and a second adsorption portion. The second adsorption portion is arranged on a downstream side of the first adsorption portion in the direction of passage of the target gas to be treated so as to be spaced apart from the first adsorption portion. The first adsorption portion includes first flow passages. The second adsorption portion includes second flow passages. A first desorption gas flow passage communicating with the first flow passages and the second flow passages is defined between the first adsorption portion and the second adsorption portion in the direction of passage of the target gas to be treated.
[2] In the acid gas adsorption device according to the above-mentioned item [1], each of the first adsorption portion and the second adsorption portion may include: a honeycomb-like base material including a plurality of cells, each extending from a first end surface to a second end surface; and acid gas adsorption layers, which are positioned in the cells, respectively, and include an acid gas adsorption material. The cells of the first adsorption portion include the first flow passages, and the cells of the second adsorption portion include the second flow passages.
[3] In the acid gas adsorption device according to the above-mentioned item [1] or [2], the acid gas may be carbon dioxide.
[4] The acid gas adsorption device according to any one of the above-mentioned items [1] to [3] may further include a case and a first on-off valve. The case houses the acid gas adsorption part. The first on-off valve is housed in the case, and is capable of opening and closing an internal space of the case. The first on-off valve is arranged on an upstream side of the first adsorption portion in the direction of passage of the target gas to be treated. When the first on-off valve is in a closed state, a second desorption gas flow passage communicating with the first flow passages may be defined between the first on-off valve and the first adsorption portion in the direction of passage of the target gas to be treated.
[5] In the acid gas adsorption device according to the above-mentioned item [4], the case may have an inflow port, an outflow port, and a first opening. The inflow port is positioned at one end of the case in the direction of passage of the target gas to be treated. The outflow port is positioned at another end of the case in the direction of passage of the target gas to be treated. The first opening communicates with the first desorption gas flow passage. A part of the internal space of the case, in which the first on-off valve is arranged, may be formed as a first opening and closing port to be opened and closed by the first on-off valve. An opening area of the first opening and closing port may be larger than an opening area of the first opening.
[6] The acid gas adsorption device according to any one of the above-mentioned items [1] to [5] may further include a case and a second on-off valve. The case houses the acid gas adsorption part. The second on-off valve is housed in the case, and is capable of opening and closing an internal space of the case. The second on-off valve is arranged on a downstream side of the second adsorption portion in the direction of passage of the target gas to be treated. When the second on-off valve is in a closed state, a third desorption gas flow passage communicating with the second flow passages may be defined between the second adsorption portion and the second on-off valve in the direction of passage of the target gas to be treated.
[7] In the acid gas adsorption device according to the above-mentioned item [6], the case may have an inflow port, an outflow port, and a first opening. The inflow port is positioned at one end of the case in the direction of passage of the target gas to be treated. The outflow port is positioned at another end of the case in the direction of passage of the target gas to be treated. The first opening communicates with the first desorption gas flow passage. A part of the internal space of the case, in which the second on-off valve is arranged, may be formed as a second opening and closing port to be opened and closed by the second on-off valve. An opening area of the second opening and closing port may be larger than an opening area of the first opening.
[8] In the acid gas adsorption device according to any one of the above-mentioned items [1] to [7], the first adsorption portion may be divided into a plurality of blocks in a direction orthogonal to the direction of passage of the target gas to be treated.
[9] In the acid gas adsorption device according to any one of the above-mentioned items [1] to [8], the second adsorption portion may be divided into a plurality of blocks in a direction orthogonal to the direction of passage of the target gas to be treated.

### Advantageous Effects of Invention

According to the embodiments of the present invention, the acid gas adsorption device capable of stably desorbing the acid gas from the acid gas adsorption material can be achieved.

### Brief Description of Drawings

FIG. 1 is a schematic configuration view of an acid gas adsorption device according to one embodiment of the present invention.
FIG. 2 is a schematic configuration view of an acid gas adsorption device according to another embodiment of the present invention.
FIG. 3 is a schematic perspective view of a block of FIG. 2 according to an embodiment.
FIG. 4 is an axial sectional view of the block of FIG. 2.
FIG. 5 is a schematic configuration view of the block of FIG. 2 according to another embodiment.
FIG. 6 is a schematic configuration view of an acid gas adsorption device according to still another embodiment of the present invention.
FIG. 7 is a schematic configuration view of an acid gas adsorption device according to still another embodiment of the present invention.
FIG. 8 is a schematic configuration view of an acid gas adsorption device according to still another embodiment of the present invention.
FIG. 9 is a schematic configuration view of an acid gas adsorption device according to still another embodiment of the present invention.

### Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present invention.

### A. Overview of Acid Gas Adsorption Device

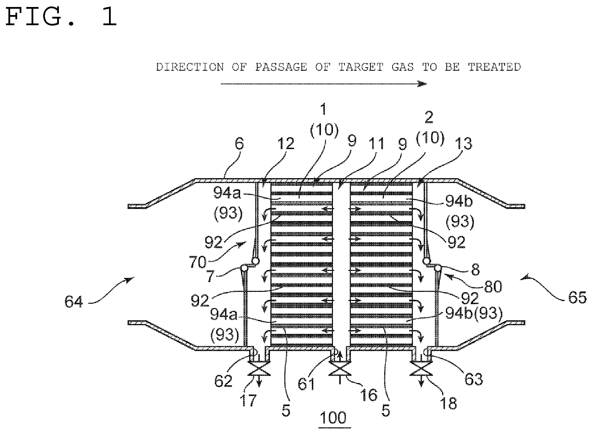

FIG. **1** is a schematic configuration view of an acid gas adsorption device according to one embodiment of the present invention.

An acid gas adsorption device **100** of the illustrated example includes an acid gas adsorption part **10** that allows passage of a target gas to be treated in a predetermined direction. The acid gas adsorption part **10** includes a first adsorption portion **1** and a second adsorption portion **2.** The second adsorption portion **2** is arranged on a downstream side of the first adsorption portion **1** in a direction of passage of the target gas to be treated so as to be spaced apart from the first adsorption portion **1.** The first adsorption portion **1** includes first flow passages **94a.** The second adsorption portion **2** includes second flow passages **94b.** A first desorption gas flow passage **11** communicating with the first flow passages **94a** and the second flow passages **94b** is defined between the first adsorption portion **1** and the second adsorption portion 2 in the direction of passage of the target gas to be treated.

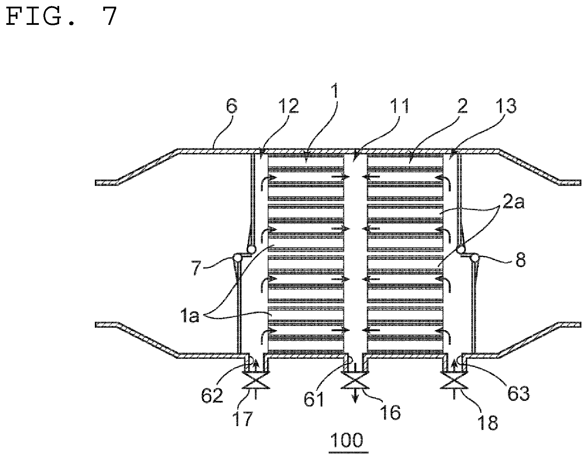

With such a configuration, the first adsorption portion and the second adsorption portion are arranged so as to be spaced apart from each other in the direction of passage of the target gas to be treated, and the first desorption gas flow passage is defined therebetween. The first desorption gas flow passage communicates with the first flow passages of the first adsorption portion and the second flow passages of the second adsorption portion. Thus, in a desorption step described later, a desorption gas can be supplied to the first flow passages and the second flow passages via the first desorption gas flow passage (see FIG. **1**), or the desorption gas that has passed through the first flow passages and the second flow passages can be caused to flow into the first desorption gas flow passage (see FIG. **7**). As a result, the desorption gas can be caused to flow uniformly through the entirety of the acid gas adsorption part while a distance of flow of the desorption gas can be reduced. In this manner, a temperature distribution in the acid gas adsorption part can be maintained uniform, and hence an acid gas can be stably desorbed from an acid gas adsorption material.

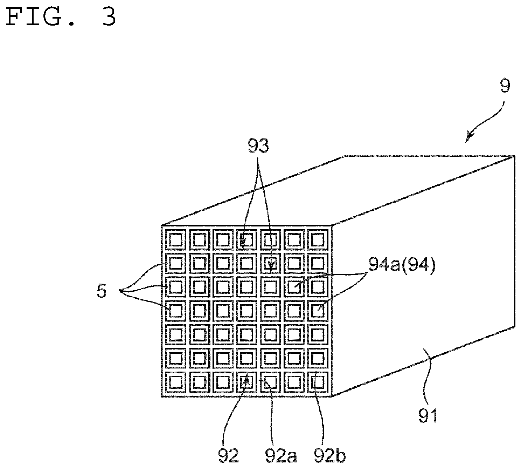

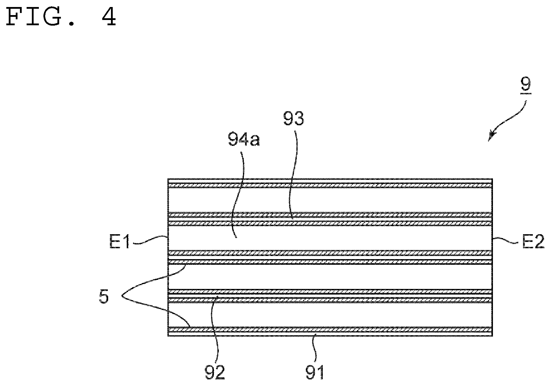

In one embodiment, each of the first adsorption portion **1** and the second adsorption portion **2** includes a honeycomb-like base material **9** and acid gas adsorption layers **5** (see FIG. **3** and FIG. **4**). The honeycomb-like base material **9** includes a plurality of cells **93,** each extending from a first end surface **E1** to a second end surface **E2** (see FIG. **4**). The acid gas adsorption layer **5** is positioned inside the cell **93** and includes the acid gas adsorption material. The cells **93** of the first adsorption portion **1** include the first flow passages **94a.** The cells **93** of the second adsorption portion **2** include the second flow passages **94b.** With such a configuration, as compared to a case in which the acid gas adsorption part has a pellet structure, the desorption gas can be caused to flow more uniformly through the entirety of the acid gas adsorption part. Thus, the temperature distribution in the acid gas adsorption part can be maintained uniform.

In the acid gas adsorption part **10** of the illustrated example, the plurality of cells **93** extend in the direction of passage of the target gas to be treated, and are arranged in parallel in a direction orthogonal to the direction of passage of the target gas to be treated. Thus, in the first adsorption portion **1,** the plurality of first flow passages **94a** are arranged in parallel in the direction orthogonal to the direction of passage of the target gas to be treated. In the second adsorption portion **2,** the plurality of second flow passages **94b** of the second adsorption portion **2** are arranged in parallel in the direction orthogonal to the direction of passage of the target gas to be treated.

In the illustrated example, the first desorption gas flow passage **11** extends in the direction orthogonal to the direction of passage of the target gas to be treated, and communicates with all of the plurality of first flow passages **94a** and the plurality of second flow passages **94b.**

A dimension of the first adsorption portion **1** with respect to a dimension of the second adsorption portion **2** in the direction of passage of the target gas to be treated is, for example, 0.5 or more, preferably 0.8 or more, and is, for example, 1.5 or less, preferably 1.2 or less, more preferably 1. Each of the dimension of the first adsorption portion **1** and the dimension of the second adsorption portion **2** in the direction of passage of the target gas to be treated is, for example, 0.25 m or more, preferably 0.30 m or more, and is, for example, 1.0 m or less, preferably 0.5 m or less.

When the dimension of the first adsorption portion falls within the above-mentioned ranges, a length of the first flow passages of the first adsorption portion and a length of the second flow passages of the second adsorption portion can be ensured in a well-balanced manner. Thus, the generation of a temperature difference between the first adsorption portion and the second adsorption portion in the desorption step can be suppressed, and hence the acid gas can be more stably desorbed from the acid gas adsorption material.

A dimension of the first desorption gas flow passage **11** in the direction of passage of the target gas to be treated is a distance between the first adsorption portion **1** and the second adsorption portion **2,** and is a width of the first desorption gas flow passage **11** when viewed from the direction (depth direction on the drawing sheet of FIG. **1**) orthogonal to the direction of passage of the target gas to be treated.

The dimension of the first desorption gas flow passage **11** with respect to the dimension of the first adsorption portion **1** in the direction of passage of the target gas to be treated is, for example, 1/100 or more, preferably 1/20 or more, and is, for example, 1/5 or less, preferably 1/10 or less. The dimension of the first desorption gas flow passage **11** in the direction of passage of the target gas to be treated is, for example, 0.2 cm or more, preferably 0.5 cm or more, and is, for example, 5 cm or less, preferably 2 cm or less. With such a design, permeation resistance through the adsorption portions becomes sufficiently larger than permeation resistance through the desorption gas flow passage. Thus, the distribution of the desorption gas becomes uniform. The dimension of the desorption gas flow passage is determined based on the resistance in the adsorption portions. However, as long as the distribution of the desorption gas is uniform, the dimension of the desorption gas flow passage can be appropriately changed in accordance with intended effects. Further, when the dimension of the first desorption gas flow passage falls within the above-mentioned ranges, stagnation of the target gas to be treated in the first desorption gas flow passage in an adsorption step described later can be suppressed, and smooth passage of the desorption gas can be achieved in the desorption step described later.

In one embodiment, during the passage of the desorption gas, a pressure loss in the first adsorption portion **1** is larger than a pressure loss in the first desorption gas flow passage **11,** and a pressure loss in the second adsorption portion **2** is larger than the pressure loss in the first desorption gas flow passage **11.**

Each of a dimension of the first adsorption portion **1** and a dimension of the second adsorption portion **2** in the direction orthogonal to the direction of passage of the target gas to be treated is not limited to any particular dimension, and the dimension is, for example, 1.5 m or more, preferably 2.0 m or more, and is, for example, 4.0 m or less, preferably 3.0 m or less.

In one embodiment, the acid gas adsorption device **100** further includes a case **6.** The case **6** houses the acid gas adsorption part **10** including the first adsorption portion **1,** the second adsorption portion **2,** and the first desorption gas flow passage **11.** In the illustrated example, the case **6** has a tubular shape extending in the direction of passage of the target gas to be treated. One end of the case **6** is formed as an inflow port **64,** and another end of the case **6** is formed as an outflow port **65.**

In other words, the case **6** has the inflow port **64** and the outflow port **65.** The inflow port **64** is positioned at one end of the case **6** in the direction of passage of the target gas to be treated. In the adsorption step described later, the target gas to be treated passes through the inflow port **64** to flow into an internal space of the case **6.** Further, the outflow port **65** is positioned at another end of the case 6 in the direction of passage of the target gas to be treated. In the desorption step described later, a treated gas, which has a reduced acid gas concentration after having passed through the acid gas adsorption part **10,** passes through the outflow port **65** to flow out of the case **6.**

An opening area of the inflow port **64** and an opening area of the outflow port **65** may be the same, or may be different from each other. In the illustrated example, the opening area of the inflow port **64** and the opening area of the outflow port **65** are the same.

A first opening **61** communicating with the first desorption gas flow passage **11** is typically formed in a side wall of the case **6.** In other words, the case **6** further has the first opening **61.** A direction in which the first opening **61** extends may be parallel to a direction in which the first desorption gas flow passage **11** extends, or may be inclined so as to intersect with the direction in which the first desorption gas flow passage **11** extends. In the illustrated example, the direction in which the first opening **61** extends is parallel to the direction in which the first desorption gas flow passage **11** extends.

In the illustrated example, a first valve **16** is provided at the first opening **61.** A desorption gas supply unit (not shown) capable of supplying the desorption gas to the first desorption gas flow passage **11** is connected to the first opening **61** through intermediation of the first valve **16.**

In one embodiment, the acid gas adsorption device **100** further includes a first on-off valve **7.** The first on-off valve **7** is housed in the case **6,** and is capable of opening and closing the internal space of the case **6.** The first on-off valve **7** is arranged on an upstream side of the first adsorption portion **1** in the direction of passage of the target gas to be treated. Examples of the first on-off valve **7** include a ball valve, a gate valve, and a butterfly valve. In the illustrated example, the first on-off valve **7** is a butterfly valve. When the first on-off valve **7** is in a closed state, a second desorption gas flow passage **12** communicating with the first flow passages **94a** is defined between the first on-off valve **7** and the first adsorption portion **1** in the direction of passage of the target gas to be treated. With such a configuration, the first desorption gas flow passage and the second desorption gas flow passage allow the desorption gas to flow smoothly and uniformly through the entirety of the first adsorption portion. Thus, the acid gas can be stably desorbed from the acid gas adsorption material in the first adsorption portion.

In one embodiment, a part of the internal space of the case **6,** in which the first on-off valve **7** is arranged, is formed as a first opening and closing port **70** to be opened and closed by the first on-off valve **7.** An opening area of the first opening and closing port **70** is typically larger than an opening area of the first opening **61.** The opening area of the first opening and closing port **70** is, for example, 8 to 12 times larger than the opening area of the first opening **61.** When the opening area of the first opening and closing port and the opening area of the first opening have such a relationship, the distribution of flow of the desorption gas can be maintained uniform in the desorption step while a pressure loss in the adsorption step is kept low. Thus, the acid gas can be sufficiently desorbed.

The opening area of the first opening and closing port 70 may be the same as the opening area of the inflow port **64,** or may be different from the opening area of the inflow port **64.** In the illustrated example, the opening area of the first opening and closing port **70** is larger than the opening area of the inflow port **64.** As a result, the distribution of flow of the desorption gas can be maintained uniform in the desorption step while a pressure loss in the adsorption step is kept low. Thus, the acid gas can be sufficiently desorbed.

The opening area of the first opening and closing port 70 is an area of a portion surrounded by the side wall of the case **6** on a cross section of the case **6,** which is taken at the position of the first on-off valve **7** in the direction orthogonal to an axial direction (direction of passage of the target gas to be treated) of the case **6.**

In the illustrated example, the second desorption gas flow passage **12** is positioned on a side opposite to the first desorption gas flow passage **11** with respect to the first adsorption portion **1.** The second desorption gas flow passage **12** extends in the direction orthogonal to the direction of passage of the target gas to be treated, and communicates with all of the plurality of first flow passages **94a.**

A dimension of the second desorption gas flow passage **12** in the direction of passage of the target gas to be treated is a distance between the first adsorption portion **1** and the first on-off valve **7** being in the closed state, and is a width of the second desorption gas flow passage **12** when viewed from the direction (depth direction on the drawing sheet of FIG. **1**) orthogonal to the direction of passage of the target gas to be treated.

The maximum dimension of the second desorption gas flow passage **12** with respect to the dimension of the first adsorption portion **1** in the direction of passage of the target gas to be treated is, for example, 1/100 or more, preferably 1/20 or more, and is, for example, 1/5 or less, preferably 1/10 or less. The maximum dimension of the second desorption gas flow passage **12** in the direction of passage of the target gas to be treated is, for example, 0.2 cm or more, preferably 0.5 cm or more, and is, for example, 5 cm or less, preferably 2 cm or less. When the maximum dimension of the second desorption gas flow passage falls within the above-mentioned ranges, smooth passage of the desorption gas can be achieved in the desorption step described later.

In one embodiment, during the passage of the desorption gas, the pressure loss in the first adsorption portion **1** is larger than a pressure loss in the second desorption gas flow passage **12.**

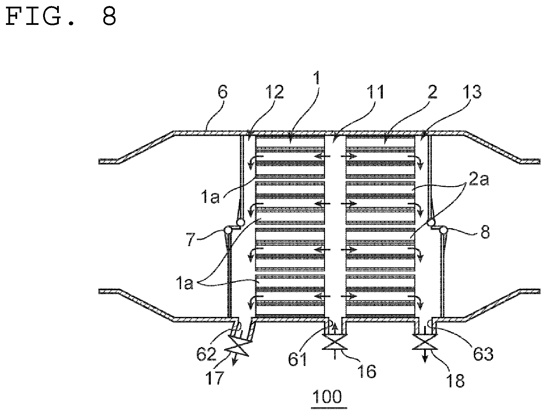

In one embodiment, a second opening **62** communicating with the second desorption gas flow passage **12** is formed in the side wall of the case **6.** In other words, the case **6** further has the second opening **62.** A direction in which the second opening **62** extends may be parallel to a direction in which the second desorption gas flow passage **12** extends (see FIG. **1**), or may be inclined so as to intersect with the direction in which the second desorption gas flow passage **12** extends (see FIG. **8**).

In the illustrated example, a second valve **17** is provided at the second opening **62.** A capture unit (not shown) for capturing the desorption gas containing the acid gas desorbed from the acid gas adsorption material is connected to the second opening **62** through intermediation of the second valve **17.**

An opening area of the second opening **62** may be the same as the opening area of the first opening **61,** or may be different from the opening area of the first opening **61.** In the illustrated example, the opening area of the second opening **62** is the same as the opening area of the first opening **61.** The opening area of the second opening **62** is typically smaller than the opening area of the first opening and closing port **70.**

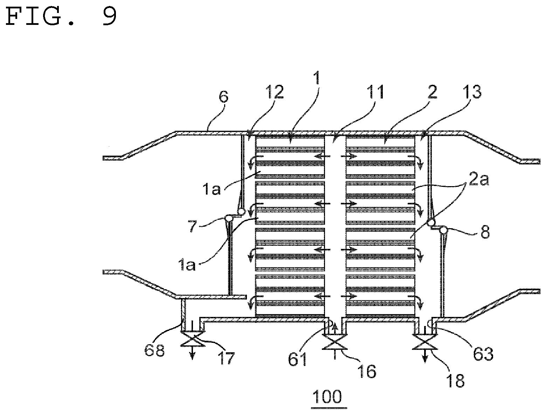

As illustrated in FIG. **9****,** in one embodiment, the acid gas adsorption device **100** may include a duct **68** in place of the second opening **62.** The duct **68** communicates with the second desorption gas flow passage **12.** In the illustrated example, the duct **68** integrally includes a first portion and a second portion. The first portion extends in the direction of passage of the target gas to be treated. The second portion extends in the direction intersecting with (typically, orthogonal to) the direction of passage of the target gas to be treated. One end of the first portion communicates with the second desorption gas flow passage **12.** The second portion extends continuously from another end of the first portion. The second valve **17** is typically provided at a free end of the second portion. The duct **68** may be formed integrally with the case **6,** or may be mounted to the case **6** as a separate body.

As illustrated in FIG. **1****,** in one embodiment, the acid gas adsorption device **100** further include a second on-off valve **8.** The second on-off valve **8** is housed in the case **6,** and is capable of opening and closing the internal space of the case **6.** The second on-off valve **8** is arranged on a downstream side of the second adsorption portion **2** in the direction of passage of the target gas to be treated. Examples of the second on-off valve **8** include a ball valve, a gate valve, and a butterfly valve. In the illustrated example, the second on-off valve **8** is a butterfly valve. When the second on-off valve **8** is in a closed state, a third desorption gas flow passage **13** communicating with the second flow passages **94b** is defined between the second adsorption portion **2** and the second on-off valve **8** in the direction of passage of the target gas to be treated. With such a configuration, the first desorption gas flow passage and the third desorption gas flow passage allow the desorption gas to flow smoothly and uniformly through the entirety of the second adsorption portion. Thus, the acid gas can be stably desorbed from the acid gas adsorption material in the second adsorption portion.

In one embodiment, a part of the internal space of the case **6,** in which the second on-off valve **8** is arranged, is formed as a second opening and closing port **80** to be opened and closed by the second on-off valve **8.** An opening area of the second opening and closing port **80** is typically larger than the opening area of each of the first opening **61** and the second opening **62.** The opening area of the second opening and closing port **80** is, for example, 8 to 12 times larger than the opening area of the first opening **61.** When the opening area of the second opening and closing port and the opening area of the first opening have such a relationship, the distribution of flow of the desorption gas can be maintained uniform in the desorption step while a pressure loss in the adsorption step is kept low.

The opening area of the second opening and closing port **80** may be the same as the opening area of the first opening and closing port **70,** or may be different from the opening area of the first opening and closing port **70.** In the illustrated example, the opening area of the second opening and closing port **80** is the same as the opening area of the first opening and closing port **70.**

Further, the opening area of the second opening and closing port **80** may be the same as the opening area of the outflow port **65,** or may be different from the opening area of the outflow port **65.** In the illustrated example, the opening area of the second opening and closing port **80** is larger than the opening area of the outflow port **65.** As a result, the distribution of flow of the desorption gas can be maintained uniform in the desorption step while a pressure loss in the adsorption step is kept low.

The opening area of the second opening and closing port **80** is an area of a portion surrounded by the side wall of the case **6** on a cross section of the case **6,** which is taken at the position of the second on-off valve **8** in the direction orthogonal to the axial direction (direction of passage of the target gas to be treated) of the case **6.**

In the illustrated example, the third desorption gas flow passage **13** is positioned on a side opposite to the first desorption gas flow passage **11** with respect to the second adsorption portion **2.** The third desorption gas flow passage **13** extends in the direction orthogonal to the direction of passage of the target gas to be treated, and communicates with all of the plurality of second flow passages **94b.**

A dimension of the third desorption gas flow passage **13** in the direction of passage of the target gas to be treated is a distance between the second adsorption portion **2** and the second on-off valve **8** being in the closed state, and is a width of the third desorption gas flow passage **13** when viewed from the direction (depth direction on the drawing sheet of FIG. **1**) orthogonal to the direction of passage of the target gas to be treated.

The ranges of the maximum dimension of the third desorption gas flow passage **13** in the direction of passage of the target gas to be treated are the same as the above-mentioned ranges of the maximum dimension of the second desorption gas flow passage **12.** When the maximum dimension of the third desorption gas flow passage **13** falls within the above-mentioned ranges, smooth passage of the desorption gas can be achieved in the desorption step described later.

In one embodiment, during the passage of the desorption gas, the pressure loss in the second adsorption portion 2 is larger than a pressure loss in the third desorption gas flow passage **13.**

In one embodiment, a third opening **63** communicating with the third desorption gas flow passage **13** is formed in the side wall of the case **6.** In other words, the case **6** further has the third opening **63.** A direction in which the third opening **63** extends may be parallel to a direction in which the third desorption gas flow passage **13** extends, or may be inclined so as to intersect with the direction in which the third desorption gas flow passage **13** extends.

In the illustrated example, a third valve **18** is provided at the third opening **63.** A capture unit (not shown) for capturing the desorption gas containing the acid gas desorbed from the acid gas adsorption material is connected to the third opening **63** through intermediation of the third valve **18.**

An opening area of the third opening **63** may be the same as the opening area of the second opening **62,** or may be different from the opening area of the second opening **62.** In the illustrated example, the opening area of the first opening **61,** the opening area of the second opening **62,** and the opening area of the third opening **63** are the same. The opening area of the third opening **63** is typically smaller than the opening area of the second opening and closing port **80.**

Further, the acid gas adsorption device **100** may include a duct communicating with the third desorption gas flow passage **13** in place of the third opening **63.**

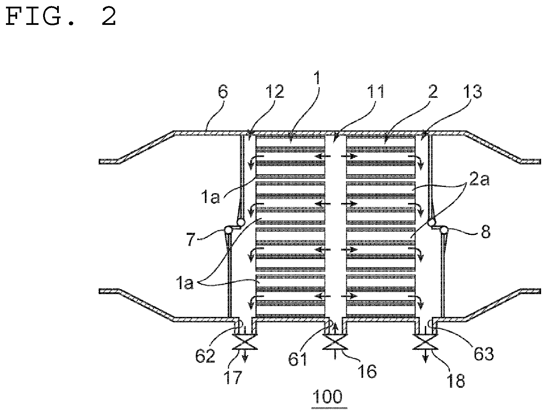

In one embodiment, as illustrated in FIG. **2****,** the first adsorption portion **1** is divided into a plurality of first blocks **1a** in the direction orthogonal to the direction of passage of the target gas to be treated. In other words, the first adsorption portion **1** is formed of the plurality of first blocks **1a** arranged in the direction orthogonal to the direction of passage of the target gas to be treated. Thus, the first blocks, each being relatively small, are produced to form the first adsorption portion. Accordingly, as compared to a case in which the first adsorption portion is produced as one body, the first adsorption portion can easily be produced.

Adjacent first blocks **1a** among the plurality of first blocks **1a** may define a gap therebetween or may be in contact with each other in the direction orthogonal to the direction of passage of the target gas to be treated. Further, although not shown, a plate-like member may be provided between adjacent first blocks **1a**.

In the illustrated example, the first adsorption portion **1** is divided into four blocks in the up-and-down direction on the drawing sheet (direction orthogonal to the direction of passage of the target gas to be treated). The first adsorption portion 1 may be divided into a plurality of blocks in the depth direction on the drawing sheet (direction orthogonal to the direction of passage of the target gas to be treated).

The number of first blocks **1a** is, for example, 2 or more, preferably 3 or more, more preferably 5 or more, and is, for example, 300 or less.

In one embodiment, the second adsorption portion **2** is divided into a plurality of second blocks **2a** in the direction orthogonal to the direction of passage of the target gas to be treated. In other words, the second adsorption portion **2** is formed of the plurality of second blocks **2a** arranged in the direction orthogonal to the direction of passage of the target gas to be treated. Thus, the second blocks, each being relatively small, are produced to form the second adsorption portion. Accordingly, the second adsorption portion can easily be produced. Accordingly, as compared to a case in which the second adsorption portion is produced as one body, the second adsorption portion can easily be produced.

Adjacent second blocks **2a** among the plurality of second blocks **2a** may define a gap therebetween or may be in contact with each other in the direction orthogonal to the direction of passage of the target gas to be treated. Further, although not shown, a plate-like member may be provided between adjacent second blocks **2a.**

In the illustrated example, the second adsorption portion **2** is divided into four blocks in the up-and-down direction on the drawing sheet (direction orthogonal to the direction of passage of the target gas to be treated). The second adsorption portion 2 may be divided into a plurality of blocks in the depth direction on the drawing sheet (direction orthogonal to the direction of passage of the target gas to be treated).

The number of second blocks **2a** is, for example, 2 or more, preferably 3 or more, more preferably 5 or more, and is, for example, 300 or less.

Now, a specific configuration of the acid gas adsorption part (the first adsorption portion **1** and the second adsorption portion **2**) is described.

### B. Acid Gas Adsorption Part

Examples of the acid gas to be adsorbed by the acid gas adsorption part **10** include carbon dioxide (CO₂), hydrogen sulfide, sulfur dioxide, nitrogen dioxide, dimethyl sulfide (DMS), and hydrogen chloride. In one embodiment, the acid gas is carbon dioxide (CO₂), and the fluid is a CO₂-containing gas. The CO₂-containing gas may contain nitrogen in addition to CO₂. The CO₂-containing gas is typically air (atmosphere). A concentration of CO₂ in the CO₂-containing gas before being supplied to the acid gas adsorption device is, for example, 100 ppm (on a volume basis) or more and 2 vol% or less.

Now, description is given in detail of a case in which the acid gas is carbon dioxide (CO₂).

As described above, the acid gas adsorption part **10** includes the first adsorption portion **1** and the second adsorption portion **2.** The first adsorption portion **1** and the second adsorption portion **2** have the same configuration. Further, the first adsorption portion **1** (integrally formed) illustrated in FIG. **1** and the first block **1a** illustrated in FIG. **2** have the same configuration except for a difference in size. Thus, the configuration of the first block **1a** illustrated in FIG. **2** is described in detail below.

In one embodiment, as illustrated in FIG. **3** and FIG. **4****,** the first block **1a** includes the honeycomb-like base material **9** and the acid gas adsorption layers 5 as described above.

### B-1. Honeycomb-like Base Material

The honeycomb-like base material **9** typically includes partition walls 92 that define a plurality of cells **93.**

The cells 93 each extend from a first end surface **E1** (inflow end surface) of the honeycomb-like base material **9** to a second end surface **E2** (outflow end surface) thereof in the lengthwise direction (axial direction) of the honeycomb-like base material **3a** (see FIG. **4**). The cells **93** each have any appropriate shape in a cross section in a direction perpendicular to the lengthwise direction of the honeycomb-like base material **9.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells **93** per unit area) may be appropriately set in accordance with purposes. The cell density may be, for example, from **4** cells/cm² to 320 cells/cm². When the cell density falls within such range, the strength and effective geometric surface area (GSA) of the honeycomb-like base material can be sufficiently ensured.

The honeycomb-like base material **9** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **9** of the illustrated example has a prismatic columnar shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **9** typically includes: an outer wall **91;** and a partition wall **92** positioned inside the outer wall **91.** In the illustrated example, the outer wall **91** and the partition wall **92** are integrally formed. The outer wall **91** and the partition wall **92** may be separate bodies.

In the illustrated example, the outer wall **91** has a rectangular cylindrical shape. The thickness of the outer wall **91** may be set to any appropriate thickness. The thickness of the outer wall **91** is, for example, from 0.1 mm to 10 mm.

The partition wall **92** defines the plurality of cells **93.** More specifically, the partition wall **92** has a first partition wall **92a** and a second partition wall **92b** perpendicular to each other, and the first partition wall **92a** and the second partition wall **92b** define the plurality of cells **93.** The sectional shapes of the cells **93** are each a substantially quadrangular shape. The configuration of the partition wall is not limited to the partition wall **92** described above. The partition wall may have a first partition wall extending in a radial direction and a second partition wall extending in a circumferential direction, which define a plurality of cells.

The thickness of the partition wall **92** may be appropriately set in accordance with the applications of the acid gas adsorption device. The thickness of the partition wall 92 is typically smaller than the thickness of the outer wall **91.** The thickness of the partition wall **92** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **92** may be appropriately set in accordance with purposes. The porosity of the partition wall **92** is, for example, 15% or more, preferably 20% or more, and is, for example, 70% or less, preferably 45% or less. The porosity may be measured, for example, by mercury porosimetry.

The bulk density of the partition wall **92** may be appropriately set in accordance with purposes. The bulk density is, for example, 0.10 g/cm³ or more, preferably 0.20 g/cm³ or more, and is, for example, 0.60 g/cm³ or less, preferably 0.50 g/cm³ or less. The bulk density may be measured, for example, by mercury porosimetry.

A material for forming the partition wall **92** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **9** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **9** is produced. When the firing is adopted, the body is fired at, for example, from 1,200°C to 1,500°C. A firing time period is, for example, 1 hour or more and 20 hours or less.

### B-2. Acid Gas Adsorption Layer (Carbon Dioxide Adsorption Layer)

In one embodiment, the acid gas adsorption layer **5** is formed on the surface of the partition wall **92** in the cell **93.** In the honeycomb-like base material **9,** a flow passage **94** (the first flow passage **94a** or the second flow passage **94b**) is formed in a portion (typically, a center portion) in a cross section of the cell **93** in which the acid gas adsorption layer **5** is not formed. The acid gas adsorption layer **5** may be formed on the entire inner surface of the partition wall **92** (specifically, so as to surround the flow passage **94**) as in the illustrated example, or may be formed on part of the surface of the partition wall. When the acid gas adsorption layer **5** is formed on the entire inner surface of the partition wall **92,** an improvement in acid gas (typically, CO₂) adsorption efficiency can be achieved.

The flow passage **94** extends from the first end surface **E1** (inflow end surface) to the second end surface **E2** (outflow end surface) as with the cells **93.** Examples of the sectional shape of the flow passage **94** include the same sectional shapes as those of the cells **93** described above. Of those, for example, a hexagon or a quadrangle is preferred, and a square, a rectangle, or a hexagon is more preferred. The sectional shapes and sizes of the flow passage **94** may be all the same, or may be at least partly different.

Typically, the target gas to be treated containing the acid gas is supplied to the cells **93** (more specifically, the flow passages **94**) in the adsorption step described later, and the desorption gas flows in the desorption step described later.

The acid gas adsorption layer **5** includes the acid gas adsorption material in accordance with the acid gas to be adsorbed. When the acid gas is CO₂, the acid gas adsorption material is a carbon dioxide adsorption material.

Any appropriate compound capable of adsorbing and desorbing CO₂ may be adopted as the carbon dioxide adsorption material. Examples of the carbon dioxide adsorption material include: nitrogen-containing compounds described later; alkali compounds, such as sodium hydroxide and potassium hydroxide; carbonate salts, such as calcium carbonate and potassium carbonate; hydrogen carbonate salts, such as calcium hydrogen carbonate and potassium hydrogen carbonate; metal organic flameworks (MOF), such as MOF-74, MOF-200, and MOF-210; zeolite; activated carbon; nitrogen-doped carbon; and ionic liquids. The carbon dioxide adsorption materials may be used alone or in combination thereof.

Of the carbon dioxide adsorption materials, a nitrogen-containing compound and an ionic liquid are preferred. More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethylene amine compounds such as tetraethylenepentamine; amino silane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; imine compounds, such as ethyleneimine, a linear polyethyleneimine, a branched polyethyleneimine having a primary amino group to tertiary amino group; piperazine compounds such as 1-(2-hydroxyethyl) piperazine; amide compounds such as a polyamidoamine; a polyvinylamine; and an organic/inorganic compound having imparted thereto an amino group as a substituent.

Of the nitrogen-containing compounds, methyldiethylamine, monoethanolamine, a cyclic amine, diethanolamine, tetraethylenepentamine, ethyleneimine, a linear polyethyleneimine, a branched polyethyleneimine, and an organic/inorganic compound having imparted thereto an amino group as a substituent are preferred.

The ionic liquid is a "salt" of a liquid formed only of an ion (an anion or a cation), and is in a liquid state under normal temperature and normal pressure (23°C, 0.1 MPa). Examples of the cation of the ionic liquid include: an ammonium-based ion, such as an imidazolium salt or a pyridinium salt; a phosphonium-based ion; a sulfonium salt; and an inorganic ion. Examples of the anion of the ionic liquid include: a halogen-based ion, such as a bromide ion or a triflate ion; a boron-based ion such as a tetraphenylborate ion; a phosphorus-based ion such as a hexafluorophosphate ion; and a sulfur-based ion such as an alkyl sulfonate ion. Of those ionic liquids, for example, a combination of an imidazolium salt serving as a cation and a triflate ion serving as an anion is preferred.

The ionic liquid is used, more preferably, in combination with a carbon dioxide adsorption material other than the ionic liquid (hereinafter referred to as "another carbon dioxide adsorption material"). In this case, the ionic liquid coats another carbon dioxide adsorption material (for example, a nitrogen-containing compound). Thus, an improvement in performance of the carbon dioxide adsorption material and an increase in lifetime thereof can be achieved.

The content ratio of the ionic liquid is, for example, 0.000001 part by mass or more, preferably 0.00001 part by mass or more, and is, for example, 0.1 part by mass or less, preferably 0.05 part by mass or less with respect to 1 part by mass of the other carbon dioxide adsorption material. When the content ratio of the ionic liquid falls within the above-mentioned ranges, an improvement in performance of the carbon dioxide adsorption material and an increase in lifetime thereof can be stably achieved.

In one embodiment, the acid gas adsorption material layer 5 includes a porous carrier in addition to the above-mentioned acid gas adsorption material. In this case, the acid gas adsorption material is typically supported by the porous carrier to face the flow passage. When the acid gas adsorption material layer includes the porous carrier, the escape of the acid gas adsorption material from the acid gas adsorption material layer can be prevented in the adsorption step and/or the desorption step.

The porous carrier may form mesopores in the acid gas adsorption material layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), activated carbon, PVDF, zeolite, mesoporous silica, and mesoporous alumina are preferred. Those porous carriers may be used alone or in combination thereof. A material different from that of the acid gas absorption material is preferably adopted for the porous carrier.

The BET specific surface area of the porous carrier is, for example, 50 m²/g or more, preferably 500 m²/g or more. When the surface area of the porous carrier is equal to or more than the above-mentioned lower limits, the acid gas adsorption material can be stably supported, and hence an improvement in acid gas adsorption efficiency can be achieved. The upper limit of the BET specific surface area of the porous carrier is typically 2,000 m²/g or less.

When the acid gas adsorption material layer includes the acid gas adsorption material and the porous carrier, the content ratio of the total of the acid gas adsorption material and the porous carrier in the acid gas adsorption material layer is, for example, 30 mass% or more, preferably 50 mass% or more, and is, for example, 100 mass% or less, preferably 99 mass% or less.

The content ratio of the acid gas adsorption material in the acid gas adsorption material layer is, for example, 30 mass% or more, preferably 50 mass% or more, and is, for example, 99 mass% or less. The content ratio of the porous carrier is, for example, 0.01 part by mass or more, preferably 0.3 part by mass or more, and is, for example, 0.7 part by mass or less, preferably 0.5 part by mass or less with respect to 1 part by mass of the acid gas adsorption material. When the content ratio of the porous carrier falls within the above-mentioned ranges, the acid gas adsorption material can be more stably supported.

Further, the acid gas adsorption material layer may be formed only of the acid gas adsorption material. In this case, the acid gas adsorption material is directly supported by the partition wall **92** to face the flow passage. When the acid gas adsorption material layer is formed only of the acid gas adsorption material, the content ratio of the acid gas adsorption material in the acid gas adsorption material layer is typically 95.0 mass% or more and 100 mass% or less. When the content ratio of the acid gas adsorption material falls within the above-mentioned range, excellent acid gas adsorption efficiency can be stably ensured.

Such an acid gas adsorption material layer is typically produced by the following method. A solution of the acid gas adsorption material is prepared by dissolving the above-mentioned acid gas adsorption material in a solvent. Further, the above-mentioned porous carrier is added to the solvent as required. The order of addition of the acid gas adsorption material and the porous carrier is not limited to any particular order. After that, the solution of the acid gas adsorption material is applied onto the base material (specifically, the partition walls), and the coating film is then dried, and is sintered as required. Thus, the acid gas adsorption material layer is formed.

Further, the configuration of the acid gas adsorption part (the first adsorption portion and the second adsorption portion) is not limited to that described above.

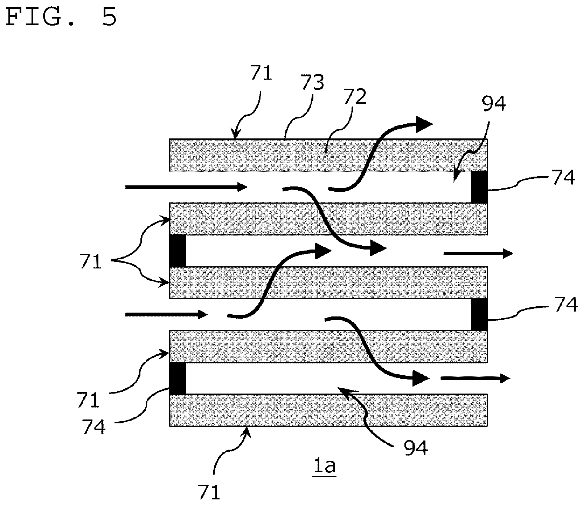

In another embodiment, as illustrated in FIG. **5****,** the first block **1a** includes a plurality of adsorption material layers **71.**

The plurality of adsorption material layers **71** are stacked in a thickness direction thereof so as to be spaced apart from each other. The flow passage **94** (the first flow passage **94a** or the second flow passage **94b**) is defined between adjacent adsorption material layers **71** among the plurality of adsorption material layers **71.** In the illustrated example, five adsorption material layers **71** are arranged in parallel. However, the number of adsorption material layers **71** is not limited thereto. The number of adsorption material layers **71** is, for example, 5 or more, preferably 10 or more, more preferably 20 or more. A distance between adjacent adsorption material layers **71** among the plurality of adsorption material layers **71** is, for example, 0.5 cm or more and 1.5 cm or less.

Each of the plurality of adsorption material layers **71** includes a flexible fiber member **73** and a plurality of pellet-like adsorption materials **72.**

The flexible fiber member **73** permits passage of gas and restricts passage of the pellet-like adsorption materials. The flexible fiber member **73** is typically formed in a hollow shape (bag shape) that allows the plurality of pellet-like adsorption materials **72** to be contained therein. The flexible fiber member **73** may be a fabric or a non-woven fabric. Examples of a material for the flexible fiber member **73** include organic fibers and natural fibers, preferably, a polyethylene terephthalate fiber, a polyethylene fiber, and a cellulosic fiber. A thickness of the flexible fiber member **73** is, for example, 25 µm or more and 500 µm or less.

The plurality of pellet-like adsorption materials **72** are filled in the flexible fiber member **73** having a hollow shape (bag shape). The pellet-like adsorption material **72** serves as an acid gas adsorption material, and typically serves as a carbon dioxide adsorption material. Examples of a material for the pellet-like adsorption material **72** include a material modified with the above-mentioned acid gas adsorption material, preferably cellulose modified with the above-mentioned acid gas adsorption material, more preferably nanofibrillated cellulose modified with the above-mentioned acid gas adsorption material. A mean primary particle diameter of the pellet-like adsorption material **72** is, for example, 60 µm or more and 1,200 µm or less. Any appropriate value may be used as a filling ratio of the pellet-like adsorption materials **72** in the adsorption material layer **71.**

The acid gas adsorption part of the illustrated example further includes a plurality of spacers **74.** The spacer **74** is located between adjacent adsorption material layers **71** among the plurality of adsorption material layers **71.** This configuration allows a distance between adjacent adsorption material layers among the adsorption material layers to be stably ensured. In one embodiment, the plurality of adsorption material layers **71** and the plurality of spacers **74** are arranged in a substantially zig-zag pattern when viewed from a direction (depth direction on the drawing sheet of FIG. **1**) orthogonal to the thickness direction of the adsorption material layers **71.**

As the acid gas adsorption part as described above, there is, for example, a gas separation unit as described in WO 2014/170184 A1. The publication is incorporated herein in its entirety by reference.

Even when the first adsorption portion (first block 1a) and/or the second adsorption portion (second block **2a**) has the configuration as illustrated in FIG. **5****,** the distance of flow of the desorption gas can be reduced as long as the first desorption gas flow passage is defined between the first adsorption portion and the second adsorption portion. Thus, the desorption gas can be caused to flow uniformly through the entirety of the acid gas adsorption part, and hence the temperature distribution in the acid gas adsorption part can be maintained uniform. That is, the same actions and effects as those described above can be obtained.

### C. Method of Capturing Acid Gas

Next, a method of capturing an acid gas with use of the acid gas adsorption device according to one embodiment of the present invention is described with reference to FIG. **1****.** The method of capturing an acid gas typically includes the adsorption step and the desorption step in the stated order.

In one embodiment, in the adsorption step, the first on-off valve **7** and the second on-off valve **8** are each brought into an open state, and the target gas to be treated containing the acid gas is supplied via the inflow port **64** of the case **6** to the acid gas adsorption part **1** adjusted to a predetermined adsorption temperature. At this time, the target gas to be treated containing the acid gas passes through the first flow passages **94a** of the first adsorption portion **1** and the second flow passages **94b** of the second adsorption portion **2** in the stated order. As a result, the acid gas adsorption material adsorbs the acid gas from the fluid containing the acid gas (typically, CO₂).

A temperature (adsorption temperature) of the acid gas adsorption part in the adsorption step is, for example, 0°C or more, preferably 10°C or more, and is, for example, 50°C or less, preferably 40°C or less. In one embodiment, the adsorption temperature is equal to an outside air temperature. An operation time period of the adsorption step (adsorption time) is, for example, 15 minutes or more, preferably 30 minutes or more, and is, for example, 3 hours or less, preferably 2 hours or less.

When the adsorption temperature and/or the adsorption time falls within the above-mentioned ranges, the acid gas adsorption material can efficiently adsorb the acid gas.

An acid gas adsorption rate in the adsorption step (=100-(concentration of the acid gas in the fluid having passed through the acid gas adsorption part/concentration of the acid gas in the fluid before being supplied to the acid gas adsorption part×100)) is, for example, 60% or more, preferably 75% or more, more preferably 80% or more, and is, for example, 90% or less.

Next, in the desorption step, typically, the first on-off valve **7** and the second on-off valve **8** are each brought into a closed state, and the acid gas adsorption part **10** (the first adsorption portion **1** and the second adsorption portion **2**) is heated to a desorption temperature higher than the adsorption temperature. More specifically, after the temperature of each of the first adsorption portion **1** and the second adsorption portion **2** is raised to the desorption temperature, the first adsorption portion **1** and the second adsorption portion **2** are maintained at the desorption temperature for predetermined desorption time. As a result, the acid gas adsorbed by the acid gas adsorption material in the adsorption step is desorbed from the acid gas adsorption material. At this time, the desorption gas is supplied to the first desorption gas flow passage **11** via the first opening **61** of the case **6.** The desorption gas supplied to the first desorption gas flow passage **11** flows into the first flow passages **94a** of the first adsorption portion **1** or the second flow passages **94b** of the second adsorption portion **2.** The acid gas desorbed from the acid gas adsorption material of the first adsorption portion **1** flows out into the second desorption gas flow passage **12** together with the desorption gas passing through the first flow passages **94a,** and then is captured via the second opening **62** of the case **6.** The acid gas desorbed from the acid gas adsorption material of the second adsorption portion **2** flows out into the third desorption gas flow passage **13** together with the desorption gas passing through the second flow passages **94b,** and then is captured via the third opening **63** of the case **6.** The gas captured in the desorption step is sometimes referred to as "captured gas".

The desorption gas is preferably a captured gas that has previously been captured by the acid gas adsorption device. The use of the captured gas as the desorption gas enables achievement of an increase in concentration of the acid gas in the captured gas.

The temperature of the acid gas adsorption part in the desorption step (desorption temperature) is, for example, 70°C or more, preferably 80°C or more, and is, for example, 200°C or less, preferably 110°C or less. An operation time period of the desorption step (desorption time for which the acid gas adsorption part is maintained at the desorption temperature) is, for example, 1 minute or more, preferably 5 minutes or more, and is, for example, 1 hour or less, preferably 30 minutes or less. When the desorption temperature and/or the desorption time falls within the above-mentioned ranges, the acid gas can be sufficiently desorbed from the acid gas adsorption material.

In the desorption step, the captured gas can also be sucked by using, for example, the desorption gas and a decompression pump in combination.

With the method described above, in the desorption step, the desorption gas can be caused to flow uniformly through the entirety of each of the first adsorption portion and the second adsorption portion, and hence the acid gas can be efficiently captured. The adsorption step and the desorption step are preferably repeated in order.

### D. Modification Example of Acid Gas Adsorption Device

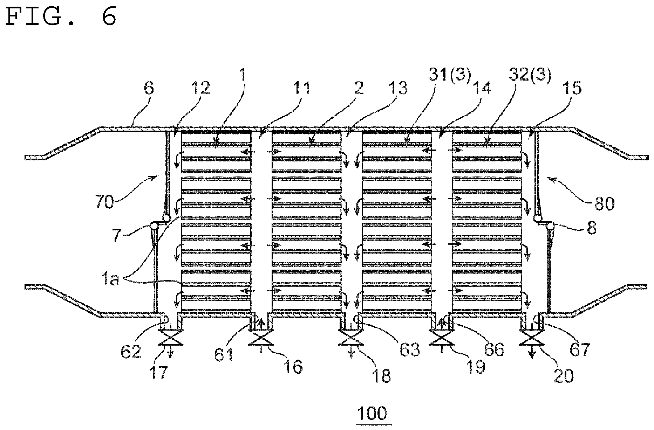

As illustrated in FIG. **6****,** the acid gas adsorption device **100** may further include an n-th adsorption portion **3** in addition to the first adsorption portion **1** and the second adsorption portion **2.** The number "n" is, for example, 3 or more and 20 or less. The n-th adsorption portion **3** is provided between the second adsorption portion **2** and the second on-off valve **8.** When a plurality of n-th adsorption portions **3** are provided, the n-th adsorption portions **3** are arranged on the downstream side of the second adsorption portion **2** in order in the direction of passage of the target gas to be treated. Desorption gas flow passages may be defined between adjacent n-th adsorption portions **3** among the plurality of n-th adsorption portions **3** and between the n-th adsorption portion **3** positioned on the most downstream side and the second on-off valve **8** being in the closed state. The n-th adsorption portion **3** has the same configuration as that of the first adsorption portion, and hence a detailed description thereof is omitted.

In the illustrated example, the acid gas adsorption device 100 includes a third adsorption portion **31** and a fourth adsorption portion **32** in addition to the first adsorption portion **1** and the second adsorption portion **2.** The third adsorption portion **31** is arranged on the downstream side of the second adsorption portion **2** in the direction of passage of the target gas to be treated so as to be spaced apart therefrom. In this embodiment, a third desorption gas flow passage **13** is defined between the second adsorption portion **2** and the third adsorption portion **31** in the direction of passage of the target gas to be treated.

The fourth adsorption portion **32** is arranged on the downstream side of the third adsorption portion **31** in the direction of passage of the target gas to be treated so as to be spaced apart therefrom. In this embodiment, a fourth desorption gas flow passage **14** is defined between the third adsorption portion **31** and the fourth adsorption portion **32** in the direction of passage of the target gas to be treated. Further, a fourth opening **66** communicating with the fourth desorption gas flow passage **14** is formed in the side wall of the case **6.** In other words, the case **6** further has the fourth opening **66.** The fourth opening **66** can be described in the same manner as that for the first opening **61** described above.

In the illustrated example, a fourth valve **19** is provided at the fourth opening **66.** A desorption gas supply unit (not shown) capable of supplying the desorption gas via the fourth valve **19** is connected to the fourth opening **66.** In the desorption step described above, the desorption gas is supplied to the fourth desorption gas flow passage **14** in the same manner as that for the first desorption gas flow passage **11.**

In the illustrated example, a fifth desorption gas flow passage **15** is defined between the fourth adsorption portion **32** and the second on-off valve **8** being in the closed state. Further, a fifth opening **67** communicating with the fifth desorption gas flow passage **15** is formed in the side wall of the case **6.** In other words, the case **6** further has the fifth opening **67.** The fifth opening **67** can be described in the same manner as that for the third opening **63** described above. The acid gas adsorption device **100** may include a duct communicating with the fifth desorption gas flow passage **15** in place of the fifth opening **67.**

In the illustrated example, a capture unit (not shown) for capturing the desorption gas including the acid gas desorbed from the acid gas adsorption material is connected to the fifth opening **67** through intermediation of a fifth valve **20.** In the desorption step described above, the captured gas passes through the fifth desorption gas flow passage **15** in the same manner as through the second desorption gas flow passage **12.** With such a configuration as well, the acid gas can be stably desorbed from the acid gas adsorption material.

In the acid gas adsorption device **100** illustrated in FIG. **1** to FIG. **6****,** in the desorption step described above, the desorption gas is supplied to the first desorption gas flow passage **11,** and the captured gas passes through the second desorption gas flow passage **12** and the third desorption gas flow passage **13.** As illustrated in FIG. **7****,** the desorption gas may be supplied to the second desorption gas flow passage 12 and the third desorption gas flow passage **13,** and the captured gas may pass through the first desorption gas flow passage **11.** In this case, the desorption gas supply unit (not shown) is connected to the second opening **62** and the third opening **63,** and the capture unit (not shown) is connected to the first opening **61.** With such a configuration as well, the acid gas can be stably desorbed from the acid gas adsorption material.

### Industrial Applicability

The acid gas adsorption device according to the embodiment of the present invention can be used for separation and capture of an acid gas, and particularly, can be suitably used for a Carbon dioxide Capture, Utilization and Storage (CCUS) cycle.

### Reference Signs List

- **1**: first adsorption portion
- **2**: second adsorption portion
- **6**: case
- **11**: first desorption gas flow passage
- **12**: second desorption gas flow passage
- **13**: third desorption gas flow passage
- **61**: first opening
- **64**: inflow port
- **65**: outflow port
- **70**: first opening and closing port
- **80**: second opening and closing port
- **92**: partition wall
- **93**: cell
- **94**: flow passage

## Claims

1. An acid gas adsorption device, comprising an acid gas adsorption part that allows passage of a target gas to be treated containing an acid gas in a predetermined direction,
wherein the acid gas adsorption part includes: a first adsorption portion; and a second adsorption portion arranged on a downstream side of the first adsorption portion in the direction of passage of the target gas to be treated so as to be spaced apart from the first adsorption portion,
wherein the first adsorption portion includes first flow passages,
wherein the second adsorption portion includes second flow passages, and
wherein a first desorption gas flow passage communicating with the first flow passages and the second flow passages is defined between the first adsorption portion and the second adsorption portion in the direction of passage of the target gas to be treated.

2. The acid gas adsorption device according to claim 1,
wherein each of the first adsorption portion and the second adsorption portion includes:
a honeycomb-like base material including a plurality of cells, each extending from a first end surface to a second end surface; and
acid gas adsorption layers, which are positioned in the cells, respectively, and include an acid gas adsorption material,
wherein the cells of the first adsorption portion include the first flow passages, and
wherein the cells of the second adsorption portion include the second flow passages.

3. The acid gas adsorption device according to claim 1 or 2, wherein the acid gas is carbon dioxide.

4. The acid gas adsorption device according to claim 1 or 2, further comprising:
a case that houses the acid gas adsorption part; and
a first on-off valve, which is housed in the case, and is configured to open and close an internal space of the case, the first on-off valve being arranged on an upstream side of the first adsorption portion in the direction of passage of the target gas to be treated,
wherein, when the first on-off valve is in a closed state, a second desorption gas flow passage communicating with the first flow passages is defined between the first on-off valve and the first adsorption portion in the direction of passage of the target gas to be treated.

5. The acid gas adsorption device according to claim 4,
wherein the case has:
an inflow port positioned at one end of the case in the direction of passage of the target gas to be treated;
an outflow port positioned at another end of the case in the direction of passage of the target gas to be treated; and
a first opening communicating with the first desorption gas flow passage,
wherein a part of the internal space of the case, in which the first on-off valve is arranged, is formed as a first opening and closing port to be opened and closed by the first on-off valve, and
wherein an opening area of the first opening and closing port is larger than an opening area of the first opening.

6. The acid gas adsorption device according to claim 1 or 2, further comprising:
a case that houses the acid gas adsorption part; and
a second on-off valve, which is housed in the case, and is configured to open and close an internal space of the case, the second on-off valve being arranged on a downstream side of the second adsorption portion in the direction of passage of the target gas to be treated,
wherein, when the second on-off valve is in a closed state, a third desorption gas flow passage communicating with the second flow passages is defined between the second adsorption portion and the second on-off valve in the direction of passage of the target gas to be treated.

7. The acid gas adsorption device according to claim 6,
wherein the case has:
an inflow port positioned at one end of the case in the direction of passage of the target gas to be treated;
an outflow port positioned at another end of the case in the direction of passage of the target gas to be treated; and
a first opening communicating with the first desorption gas flow passage,
wherein a part of the internal space of the case, in which the second on-off valve is arranged, is formed as a second opening and closing port to be opened and closed by the second on-off valve, and
wherein an opening area of the second opening and closing port is larger than an opening area of the first opening.

8. The acid gas adsorption device according to claim 1 or 2, wherein the first adsorption portion is divided into a plurality of blocks in a direction orthogonal to the direction of passage of the target gas to be treated.

9. The acid gas adsorption device according to claim 1 or 2, wherein the second adsorption portion is divided into a plurality of blocks in a direction orthogonal to the direction of passage of the target gas to be treated.
